# EUROPEAN PATENT SPECIFICATION

(11) **EP 3 524 789 B1**
(45) Date of publication and mention of the grant of the patent: **06.04.2022**
(21) Application number: 18805338.3
(22) Date of filing: 09.01.2018
(51) Int. Cl.: F01N 3/20, F01N 3/28, F01N 3/10

(54) **SELECTIVE CATALYTIC REDUCTION SYSTEM**
SYSTEM FÜR SELEKTIVE KATALYTISCHE REDUKTION
SYSTÈME DE RÉDUCTION CATALYTIQUE SÉLECTIVE

(30) Priority: 24.05.2017 KR 20170064194
(43) Date of publication of application: 14.08.2019
(73) Proprietor: LG Chem, Ltd., Seoul 07336 (KR)
(72) Inventor: LEE, Junyoung, Daejeon 34122 (KR); PARK, Jong Hyuk, Daejeon 34122 (KR); CHOI, Jun Won, Daejeon 34122 (KR); YU, Chang Hun, Daejeon 34122 (KR); IM, Ye Hoon, Daejeon 34122 (KR)
(74) Representative: Goddar, Heinz J.
(86) International application number: PCT/KR2018/000425
(87) International publication number: WO 2018/216876

(56) References cited:
- EP-A2- 2 495 031
- WO-A1-2014/051598
- DE-A1-102006 055 036
- DE-A1-102008 028 627
- KR-A- 20110 047 020
- KR-A- 20160 045 958
- US-A- 5 304 749
- US-A- 6 089 347
- US-A1- 2007 205 046
- US-A1- 2011 174 408
- US-A1- 2012 224 998

## Description

### TECHNICAL FIELD

The present invention relates to a selective catalytic reduction (SCR) system, more particularly a SCR system which comprises a baffle for controlling a flow deviation of fluid such as gas in various systems including a pipe.

### BACKGROUND ART

Regulations against air pollutants are being strengthened both domestically and abroad, and there has been made efforts to reduce the pollutants. Among the air pollutants, nitrogen oxides are produced in a combustion process and are technically less controllable than other pollutants. One of the post-treatment facilities that treat nitrogen oxides contained in exhaust gases is a selective catalytic reduction (SCR) system.

EP 2 495 031 A2 describes an exhaust gas nitrogen-removal system having a reducing-agentmixing and noise-attenuating structure, including a reaction chamber in which a chemical reaction occurs wherein aqueous urea is mixed with an exhaust gas and converted to ammonia, and a reactor in which a chemical reaction occurs wherein nitrogen oxides in the mixed gas supplied from the reaction chamber are converted to nitrogen through denitrification with a catalyst, wherein the reaction chamber includes a multi-mixer which enables a reducing agent and the exhaust gas to be mixed in a short period of time, and the reactor includes a catalyst filter unit in which lateral partitions of a plurality of through-holes which are coated with a catalyst and allow the mixed gas to pass therethrough are formed in a wave shape, so that the reducing agent and the exhaust gas can be mixed in a shorter period of time, thus reducing the length of the reaction chamber, and ensuring a large space for the through-holes while maintaining the contact area between the mixed gas and the catalyst, thereby minimizing differential pressure and increasing noise-attenuation effects.

US 2012/0224998 A1 describes an exhaust gas denitrifying system having a noise-reduction structure includes a reactor in which a chemical reaction that converts nitrogen oxides included in exhaust gas into nitrogen by denitrifying the nitrogen oxides using a catalyst takes place. The reactor includes a catalytic filter unit coated with a catalyst and provided with a plurality of through-holes through which exhaust gas passes; and a noise-reducing unit for removing noise from the exhaust gas denitrified by the catalytic filter unit. The reactor denitrifies the nitrogen oxides, and simultaneously reduces the noise, thus reducing the size of the exhaust gas denitrifying system.

DE 10 2006 055036 A1 describes a mixing element having a grid which has several parallel rows, and several deflection elements which protrude from the grid and are inclined relative to the grid plane normal. All deflection elements of a row are inclined in the same direction. The deflecting elements of at least two directly adjacent first rows are inclined in the same direction.

DE 10 2008 028627 A1 describes a static mixer for an exhaust pipe of an exhaust system of an internal combustion engine leading exhaust gas in a flow direction. The mixer has a plurality of mixing elements for the exhaust gas, arranged side by side at right angles to the flow direction. A plurality of mixing blades are arranged on each mixing element. Each mixing blade has a front edge area, a rear edge area and two lateral edge areas in relation to the flow direction. Each mixing element has aligned carrier on which the mixing blades are arranged over their rear edge region and are positioned relative to the carrier. Each carrier is attached to the exhaust pipe via its two end regions so that at least three mixing elements can be arranged transversely to the direction of flow next to one another at a distance of at least 5 mm from one another and all mixing blades with all lateral edge areas and with the front edge area are arranged at a distance from the exhaust pipe.

### DETAILED DESCRIPTION OF THE INVENTION

### TECHNICAL PROBLEM

The performances of a selective catalytic reduction (SCR) system may be determined by the maintenance of catalyst properties and operation conditions. Particularly, the maintenance of catalyst properties is closely related to the temperature and fluid velocity of the front end of a catalytic layer and the uniformity of mass ratio distribution of ammonia. The conventional techniques have been proposed to maintain the uniformity of flow distribution by installing baffles reflecting the shape of a system, but there is a limit in improving a flow deviation.

The present invention is designed to improve a flow deviation by applying baffle members in regions of the SCR system that the flow deviation occurs.

### TECHNICAL SOLUTION

The technical problem is solved by the subject matter of claim 1. Particular examples are given by the dependent claims. According to an example, a selective catalytic reduction (SCR) system comprises a catalytic layer, the SCR comprising a plurality of baffle members located in a position spaced apart from a front end of the catalytic layer, wherein the plurality of baffle members reduces a flow deviation that is caused by an expansion of a flow cross-section of a fluid in at least one direction, wherein each of the plurality of baffle members comprises a first part and a second part, wherein each of the first part and the second part is elongated in a direction perpendicular to the at least one direction in which the flow cross-section expands, wherein a first end portion of the first part and a first end portion the second part are integrally formed, and wherein each of the plurality of baffle members protrudes towards an inlet of the fluid.

### ADVANTAGEOUS EFFECTS

The selective catalytic reduction system according to the present invention can surprisingly optimize a flow deviation of fluid, which passes through the baffle members, at the front end of a catalytic layer.

### BRIEF DESCRIPTION OF THE DRAWINGS

FIG. 1a shows a selective catalytic reduction system comprising a plurality of baffle members according to one embodiment of the present invention, and FIG. 1b is an enlarged view of a part of FIG. 1a.
FIG. 2 shows baffle members according to one embodiment of the present invention.
FIG. 3 shows the velocity distribution of fluid before and after the baffle members of FIG. 2 are installed.
FIGS. 4 shows the mass ratio distribution of ammonia in fluid before and after the baffle members of FIG. 2 are installed.

### BEST MODE

The selective catalytic reduction (SCR) system having a catalytic layer comprises a plurality of baffle members located in the position spaced apart from the front end of the catalytic layer, wherein the plurality of baffle members reduces a flow deviation caused by an expansion of a flow cross-section of a fluid in at least one direction, wherein each of the plurality of baffle members comprises a first part and a second part, wherein each of the first part and the second part is elongated in a direction perpendicular to the at least one direction in which the flow cross-section expands, wherein a first end portion of the first part and a first end portion of the second part are integrally formed, wherein each of the plurality of baffle members protrudes towards an inlet of the fluid.

In the SCR system according to the present invention, a cross-section of each of the plurality of baffle members in a direction perpendicular to a direction in which the baffle members are elongated may have a V-shape.

In the SCR system according to the present invention, the first part and the second part of each of the plurality of baffle members may form an angle of 45° to 90° therebetween.

In the SCR system according to the present invention, a distance between a second end portion of the first part and a second end portion of the second part of each of the plurality of baffle members may range from 30 to 200 mm, and a gap between the plurality of baffle member may range from 30 to 50 mm.

In the SCR system according to the present invention, a gap between the plurality of baffle member may be constant.

Also, the SCR system according to the present invention may comprise an ammonia injection grid (AIG) spaced apart from a front end of the catalytic layer in a prescribed distance, and the plurality of baffle members may be installed at a front end of the AIG.

### EMBODIMENTS

Hereinafter, the selective catalytic reduction system comprising a plurality of baffle members according to one embodiment of the present invention will be described in detail with reference to the accompanying drawings which illustrate a preferable example of the present invention for the purpose of better explanation, not intended to limit the technical scope of the invention.

Also, the same reference numerals, unless otherwise stated, are used to denote the same or equivalent elements, components or parts illustrated in the drawings, and the repeated explanation thereof will be omitted. In addition, the size and shape of each element, component or part in the drawing may be shown in an enlarged or reduced scale for the sake of convenience.

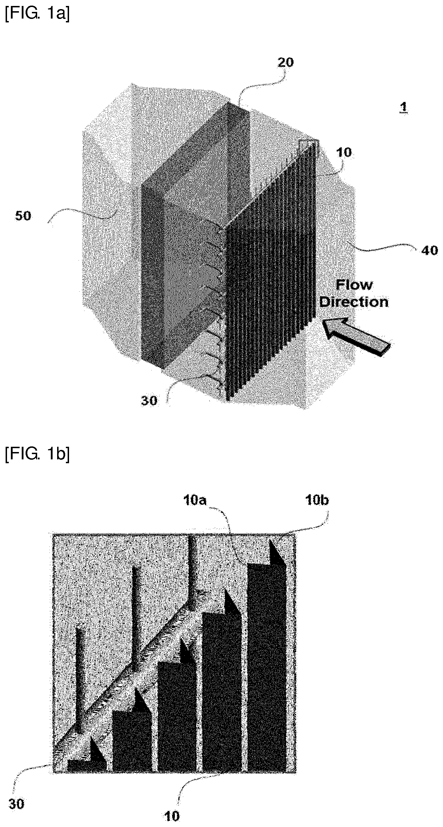

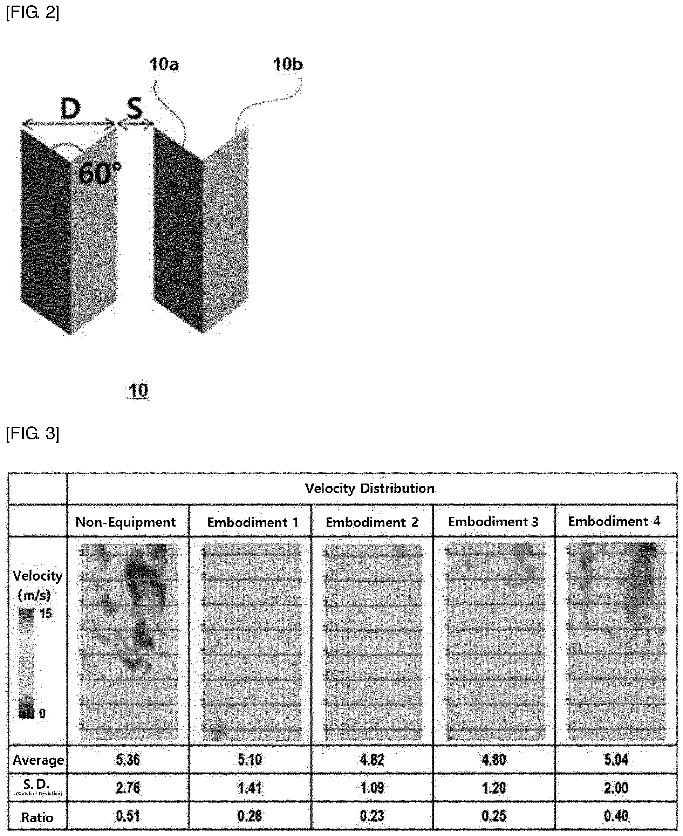

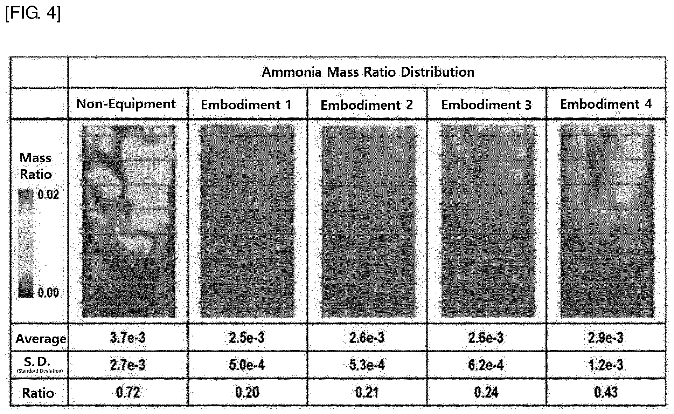

FIG. 1a shows a selective catalytic reduction (SCR) system 1 comprising a plurality of baffle members 10 for reducing a flow deviation of a fluid and a catalytic layer 20 according to one embodiment of the present invention. The fluid flows in through an inlet 40, passes between the plurality of baffle members 10 and through the catalytic layer 20 and discharges from an outlet 50. If the baffle members 10 are not installed (not shown), the fluid entering the inlet 40 undergoes a flow deviation caused by an expansion of a flow cross-section (see FIGS. 3 and 4).

However, in the SCR system 1 according to the present invention, the plurality of baffle members 10 are installed spaced from the front end of the catalytic layer 20 by a prescribed distance, thereby minimizing the flow deviation of the fluid flowing in through the inlet 40 which may be caused by an expansion of a flow cross-section (see FIGS. 3 and 4).

The plurality of baffle members 10 may be installed in a region where the flow cross-section expands and then is constant, preferably at the front end of an ammonia injection grid (AIG) 30, as shown in FIG. 1a. Also, FIG. 1a shows an embodiment of the present invention that the flow cross-section of the fluid expands in a horizontal direction, and each of the plurality of baffle members 10 is elongated in a vertical direction of the flow cross-section.

FIG. 1 b is an enlarged view of a part of the plurality of baffle members 10 installed at the front end of the AIG 30 in FIG. 1a. Referring to FIGS. 1a and 1b, each of the baffle members is elongated in a vertical direction of the flow cross-section, and each baffle member comprises a first part 10a and a second part 10b which are integrally formed. A first end portion of the first part 10a and a first end portion of the second part 10b merge, the first part 10a and the second part 10b of each of the baffle members are formed integrally, and each of the baffle members 10 may have a shape of protruding towards the inlet of the fluid. Preferably, a cross-section of each of the baffle members 10 in a direction perpendicular to a vertical direction, in which the baffle members 10 are elongated, may have a V-shape, more preferably a shape corresponding to two hypotenuses of an isosceles triangle.However, the present invention is not limited thereto, and the cross-section of each baffle member 10 in a direction perpendicular to a vertical direction, in which the baffle members 10 are elongated may be a triangle shape, and the first part 10a and the second part 10b which protrude towards the inlet part of the fluid are configured as described above, while the other parts of each baffle member 10 may be variously implemented by way of change or modification.

Meanwhile, if conventional baffles are installed, a pressure difference between the front end and the rear end of the baffles may be large, thereby interrupting good flow of the fluid in the whole SCR system. Accordingly, it is required to reduce the pressure difference when installing the plurality of baffle members. In the case that the plurality of baffle members are installed according to the present invention, the pressure difference is reduced by 50Pa (~ 5 mmH2O) or less to optimize a flow deviation at the front end of the catalytic layer 20.

FIG. 2 is an enlarged view of a part of the plurality of baffle members 10 shown in FIG. 1a. Each of the baffle members 10 is shaped such that a first end portion of the first part 10a and a first end portion of the second part 10b merge, and an angle between the first part 10a and the second part 10b may range from 45° to 90°, preferably 60°, and a distance (D) between a second end portion of the first part 10a and a second end portion of the second part 10b may range from 30 to 200 mm, preferably 50 to 150 mm, more preferably 100 mm. Also, a gap (S) between each baffle member 10 may range from 30 to 100 mm, preferably 30 to 50 mm.

Meanwhile, the AIG 30 of the SCR system which may be implemented according to the present invention may have a width of 4000 to 5000 mm, and the plurality of baffle members 10 may be installed in a transverse direction at the front end of the AIG 30. A length of the AIG 30 in a vertical direction may range, for example, from 4000 to 5000 mm, and in this case, a length of each of the plurality of baffle members 10 in the vertical direction may range, for example, from 50 to 100 mm. The baffle members may be made of stainless steel, preferably austenite stainless steel such as A240 TP310.

However, the present invention is not limited to the above, and any change or modification can be made to adjust the angle between the first part 10a and the second part 10b, the distance D between the second end portion of the first part 10a and the second end portion of the second part 10b, and the gap S between the baffle members 10 according to the respective implementation environment of the present invention.

FIG. 3 shows the velocity distribution of fluid at the front end of the catalytic layer 20 before and after installing the baffle members of FIG. 2. In FIG. 3, the case represented by "non-equipment" shows the velocity distribution of the fluid at the front end of the catalytic layer 20 when the baffle members are not installed. It is shown that the fluid flowing in through the inlet 40 undergoes a flow deviation caused by an expansion of a flow cross-section, and that the velocity at the front end of the catalytic layer 20 is not uniform.

On the contrary, Embodiments 1 to 4 in FIG. 3 show velocity distributions of the fluid at the front end of the catalytic layer 20 with the baffle members being installed as shown in FIG. 1a. Specifically, Embodiment 1 corresponds to the case of D=100 mm and S=30 mm in FIG. 2; Embodiment 2, the case of D=100 mm and S=40 mm in FIG. 2; Embodiment 3, the case of D=100 mm and S=50 mm in FIG. 2; and Embodiment 4, the case of D=100 mm and S=100 mm in FIG. 2. The width of AIG 30 ranges from 4000 to 5000 mm. Even if the flow cross-section of the fluid flowing in through the inlet 40 is expanded as shown in FIG. 1a, the fluid passes through the baffle members 10 according to one embodiment of the present invention, the velocity of the fluid at the front end of the catalytic layer 20 is substantially uniform without large differences, as shown with respect to Embodiments 1 to 4 in FIG. 3. Particularly, Embodiments 1 to 3 show that the velocity differences of the fluid are remarkably improved.

Further, the uniformity of the velocity distribution of the fluid flow may be determined by applying the concept that (Ratio) = (Standard Deviation) / (Average), wherein the distribution becomes more uniform as the (Ratio) decreases, while it is shown that (Average) is 5.36, (Standard Deviation) is 2.76, and (Ratio) = (Standard Deviation) / (Average) is 0.51 in the "Non-Equipment" case in FIG. 3 in which the baffle members are not installed, while, in contrast, it is shown that (Ratio) is 0.28, 0.23, 0.25, and 0.40, respectively, in Embodiments 1 to 4, respectively, in FIG. 3 in which the baffle members are installed, thus showing that the velocity differences of the fluid at the front end of the catalytic layer 20 is optimized, particularly remarkably in Embodiments 1 to 3, while, among others, Embodiment 2 with D=100 mm and S=40 mm in FIG. 2 shows the best improvement of the velocity difference of the fluid at the front end of the catalytic layer 20.

Also, FIG. 4 shows the mass ratio distribution of ammonia (NH3) at the front end of catalytic layer 20 before and after installing the baffle members of FIG. 2. The case represented by "Non-Equipment" in FIG. 4 shows the mass ratio distribution of ammonia at the front end of the catalytic layer 20 when the baffle members are not installed. The fluid flowing in through the inlet 40 undergoes a flow deviation caused by an expansion of a flow cross-section, and the fluid then passes through the AIG 30 while ammonia is diffused in the fluid, and it is shown that the mass ratio distribution of ammonia within the fluid at the front end of catalytic layer 20 is not uniform due to the flow deviation of the fluid as shown with respect to the "Non-Equipment" case in FIG. 4.

In contrast, Embodiments 1 to 4 in FIG. 4 show the mass ratio distribution of ammonia at the front end of catalytic layer 20 with the baffle members being installed as shown in FIG. 1a. Specifically, Embodiment 1 corresponds to the case of D=100 mm and S=30 mm in FIG. 2; Embodiment 2 corresponds to the case of D=100 mm and S=40 mm in FIG. 2; Embodiment 3 corresponds to the case of D=100 mm and S=50 mm in FIG. 2; and Embodiment 4 corresponds to the case of D=100 mm and S=100 mm in FIG. 2. The width of the AIG 30 ranges from 4000 to 5000 mm. Even though the flow cross-section of the fluid flowing in through the inlet 40 is expanded as shown in FIG. 1a, the fluid passes through the baffle members 10 according to one embodiment of the present invention as shown with respect to Embodiments 1 to 4 of FIG. 4, thereby exhibiting a substantially uniform mass ratio distribution of ammonia at the front end of the catalytic layer 20. Particularly, Embodiments 1 to 3 show that the mass ratio difference of ammonia in the fluid is remarkably improved.

Further, the mass ratio distribution uniformity of ammonia in the fluid may be determined by applying the concept that (Ratio) = (Standard Deviation) / (Average), wherein the distribution becomes more uniform as the (Ratio) decreases, while it is shown that the (Average) is 3.7e⁻³, (Standard Deviation) is 2.7e⁻³, and (Ratio) = (Standard Deviation) / (Average) is 0.72 in the "Non-Equipment" case in FIG. 3 in which the baffle members are not installed, while, in contrast, it is shown that (Ratio) is 0.20, 0.21, 0.24, and 0.43, respectively, in Embodiments 1 to 4, respectively, in FIG. 4 in which the baffle members are installed, thus showing that the mass ratio difference of ammonia at the front end of the catalytic layer 20 is optimized, particularly remarkably in Embodiments 1 to 3, while, among others, Embodiment 1 with D=100 mm and S=30 mm in FIG. 2 shows the best improvement in the mass ratio difference of ammonia at the front end of the catalytic layer 20.

Although FIG 1a shows that the flow cross-section of the fluid is expanded in a horizontal direction and the plurality of baffle members 10 are each elongated in a vertical direction of the flow cross-section, it is only to illustrate one embodiment of the present invention, and the present invention may also implement the case that the flow cross-section of the fluid is expanded in a vertical direction, and the plurality of baffle members 10 are each elongated in a horizontal direction of the flow cross-section, or the case that the flow cross-section of the fluid is expanded in vertical and horizontal directions, and the plurality of baffle members 10 are arranged to form a grid, wherein the form is, for example, a form of quadrangular pyramid, such that various change or modification can be made in the present invention.

While the present invention has been particularly shown and described with reference to figures and embodiments thereof, it will be understood by those of ordinary skill in the art that the scope of the present invention is not limited thereby and that various changes and modifications may be made therein. Therefore, the actual scope of the present invention will be defined by the appended claims.

### [Explanation of Reference Numerals]

- 1:: Selective catalytic reduction (SCR) system
- 10:: Baffle member
- 10a:: First part of baffle member
- 10b:: Second part of baffle member
- 20:: Catalytic layer
- 30:: Ammonia injection grid
- 40:: Inlet
- 50:: Outlet

## Claims

1. A selective catalytic reduction, SCR, system comprising:
an inlet (40);
a catalytic layer (20); and
a plurality of baffle members (10) located in a position spaced apart from a front end of the catalytic layer (20),
wherein the SCR system is such that a flow cross-section of a fluid flowing in through the inlet (40) and flowing to the catalytic layer (20) is expanded in a direction,
wherein each of the plurality of baffle members (10) comprises a first part (10a) and a second part (10b),
wherein the first part (10a) and the second part (10b) of each of the plurality of baffle members (10) are each elongated in a direction perpendicular to the direction of the expansion of the flow cross-section,
wherein a first end portion of the first part (10a) and a first end portion of the second part (10b) are integrally formed, and
wherein a cross-section of each of the plurality of baffle members (10) has a V-shape, the cross-section being perpendicular to a direction along which the baffle members (10) are elongated, wherein the V-Shape of each of the plurality of baffle members (10) protrudes towards the inlet (40),
wherein the SCR system further comprises an ammonia injection grid, AIG, (30) located in a position spaced apart from the front end of the catalytic layer (20), wherein the plurality of baffle members (10) are equipped on an upstream side of the AIG (30) with respect to a flow direction of the fluid.

2. The SCR system according to claim 1, wherein the first part (10a) and the second part (10b) of each of the plurality of baffle members (10) form an angle of 45° to 90° therebetween.

3. The SCR system according to claim 1,
wherein a distance (D) between a second end portion of the first part (10a) and a second end portion of the second part (10b) of each of the plurality of baffle members (10) ranges from 30 to 200 mm, and
wherein a gap (S) between the plurality of baffle members (10) ranges from 30 to 50 mm.

4. The SCR system according to claim 1, wherein a gap (S) between the plurality of baffle members is constant.

## Patentansprüche

1. Selektives katalytisches Reduktionssystem, SCR-System, aufweisend:
einen Einlass (40);
eine katalytische Schicht (20); und
mehrere Umlenkemente (10), die sich in einer Position befindet, die von einem vorderen Ende der katalytischen Schicht (20) beabstandet ist,
wobei das SCR-System dergestalt ist, dass ein Strömungsquerschnitt eines Fluids, das durch den Einlass (40) einströmt und zu der katalytischen Schicht (20) fließt, in einer Richtung erweitert wird,
wobei jedes der mehreren Umlenkemente (10) einen ersten Abschnitt (10a) und einen zweiten Abschnitt (10b) umfasst,
wobei der erste Abschnitt (10a) und der zweite Abschnitt (10b) jedes der mehreren Umlenkementen (10) jeweils in einer Richtung langgestreckt sind, die senkrecht zu der Richtung der Erweiterung des Strömungsquerschnitts ist,
wobei ein erster Endabschnitt des ersten Abschnitts (10a) und ein erster Endabschnitt des zweiten Abschnitts (10b) einstückig ausgebildet sind, und
wobei ein Querschnitt jedes der mehreren Umlenkemente (10) eine V-Form aufweist, wobei der Querschnitt senkrecht zu einer Richtung ist, entlang welcher die Umlenkemente (10) langgestreckt sind, wobei die V-Form jedes der mehreren Umlenkemente (10) in Richtung des Einlasses (40) vorsteht,
wobei das SCR-System ferner ein Ammoniak-Einspritzgitter, AIG, (30) umfasst, das sich in einer Position befindet, die von dem vorderen Ende der katalytischen Schicht (20) beabstandet ist, wobei die mehreren Umlenkemente (10) an einer stromaufwärts gelegenen Seite des AIG (30) in Bezug auf eine Strömungsrichtung des Fluids vorgesehen sind.

2. SCR-System nach Anspruch 1, wobei der erste Abschnitt (10a) und der zweite Abschnitt (10b) jedes der mehreren Umlenkemente (10) einen Winkel von 45° bis 90° dazwischen bilden.

3. SCR-System nach Anspruch 1,
wobei ein Abstand (D) zwischen einem zweiten Endabschnitt des ersten Abschnitts (10a) und einem zweiten Endabschnitt des zweiten Abschnitts (10b) von jedem der mehreren Umlenkemente (10) 30 bis 200 mm beträgt, und
wobei eine Lücke (S) zwischen den mehreren Umlenkementen (10) 30 bis 50 mm beträgt.

4. SCR-System nach Anspruch 1, wobei die Lücke (S) zwischen den mehreren Umlenkelementen konstant ist.

## Revendications

1. Un système de réduction catalytique sélective (SCR) composé des éléments suivants :
une entrée (40)
une couche catalytique (20) et
une pluralité de déflecteurs (10) implantés à un emplacement à l'écart d'une extrémité avant de la couche catalytique (20),
et ce système SCR est configuré afin qu'une section transversale de l'écoulement d'un liquide admis par l'entrée (40) et circulant dans la couche catalytique (20) se déploie dans un sens,
et chaque élément de cette pluralité de déflecteurs (10) comporte une première partie (10a) et une deuxième partie (10b),
et la première partie (10a) et la deuxième partie (10b) de chaque élément de cette pluralité de déflecteurs (10) ont une forme allongée dans un sens perpendiculaire au sens de déploiement de la section transversale de l'écoulement,
et une première portion d'extrémité de la première partie (10a) et une première portion d'extrémité de la deuxième partie (10b) sont formées de manière intégrale et
et une section transversale de chaque élément de cette pluralité de déflecteurs (10) a une forme trapézoïdale, et cette section transversale est perpendiculaire à un sens le long duquel les déflecteurs (10) ont une forme allongée, et la forme trapézoïdale de chaque élément de la pluralité de déflecteurs (10) fait saillie, en direction de l'entrée (40),
et le système SCR comporte, en outre, une grille d'injection d'ammoniaque (AIG) (30) qui occupe un emplacement à l'écart de l'extrémité avant de la couche catalytique (20), et la pluralité de déflecteurs (10) est équipée d'un côté amont de l'AIG (30), par rapport à un sens de circulation du liquide.

2. Le système SCR que décrit la revendication 1, si ce n'est que la première partie (10a) et la deuxième partie (10b) de chaque élément de la pluralité de déflecteurs (10) forment, entre elles, un angle compris entre 45 et 90°.

3. Le système SCR que décrit la revendication 1,
si ce n'est qu'une distance (D) entre une deuxième portion d'extrémité de la première partie (10a) et une deuxième portion d'extrémité de la deuxième partie (10b) de chaque élément de la pluralité de déflecteurs (10) se situe entre 30 et 200 mm et
si ce n'est qu'un écartement (S) entre la pluralité de déflecteurs (10) se situe entre 30 et 50 mm.

4. Le système SCR que décrit la revendication 1, si ce n'est qu'un écartement (S) entre la pluralité de déflecteurs est constant.
